# EUROPEAN PATENT SPECIFICATION

(11) **EP 0 521 551 B1**
(45) Date of publication and mention of the grant of the patent: **26.04.1995**
(21) Application number: 92201859.3
(22) Date of filing: 24.06.1992
(51) Int. Cl.: F25B 49/02

(54) **Linear-power multi-compressor refrigeration system**
Lineare Leistung aufweisende Kälteanlage mit mehreren Verdichtern
Système frigorifique à puissance linéaire et à plusieurs compresseurs

(30) Priority: 01.07.1991 IT MI911803
(43) Date of publication of application: 07.01.1993
(73) Proprietor: ARNEG S.P.A., I-35010 Marsango di Campo S. Martino, Padua (IT)
(72) Inventor: Schiesaro, Pierluigi, I-35100 Padova (IT)
(74) Representative: Fusina, Gerolamo

(56) References cited:
- EP-A- 0 444 332
- GB-A- 2 196 759
- GB-A- 2 209 851
- US-A- 2 274 336
- US-A- 2 453 095
- US-A- 4 384 462
- US-A- 4 535 602
- US-A- 4 633 672
- US-A- 4 787 211

## Description

This invention relates to a linear-power multi-compressor refrigeration system.

Refrigeration systems are known in which the actual central refrigeration unit comprises a plurality of motor-compressor units, which are of different power to achieve maximum energy efficiency.

EP-A-0 444 332 relates to a refrigeration system comprising a plurality of motor-compressors of different unit power which are operated by an inverter and a logic system and is a prior art according to Article 54(3).

The provision of motor-compressor units of different power means that for the various requirements during operation, a small number of power values in discrete steps are available based on the possible combinations of the various motor-compressor unit powers.

In this respect, it is well known that with such currently used systems as disclosed e.g. in document US-A-4 535 602 it is not possible to achieve a power output variation which is linearly continuous either upwards or downwards.

It would be possible to achieve a linearly continuous power output variation by combining with each motor-compressor unit an inverter to correlate its operation, however the cost of a single inverter is greater than the cost of an individual motor-compressor unit. The object of the present invention is to provide a multi-compressor refrigeration system comprising individual motor-compressor units of different power which is of simple construction and contained cost, while at the same time providing linearly continuous power variation to satisfy the requirement at any given time.

This object is attained according to the present invention by providing a multi-compressor refrigeration system according to claim 1.

In a preferred embodiment the two high-power motor-compressor units are each of about 40% of the total power and the low-power motor-compressor unit is of about 20% of the total power.

The structural and functional characteristics and the advantages of a refrigeration system according to the present invention will be more apparent from the description given hereinafter by way of non-limiting example with reference to the accompanying schematic drawings, in which:
Figure 1 is an operating curve of a known refrigeration system;
Figure 2 is a schematic representation of a refrigeration system according to the present invention; and
Figure 3 is an operating curve of the refrigeration system of Figure 2.

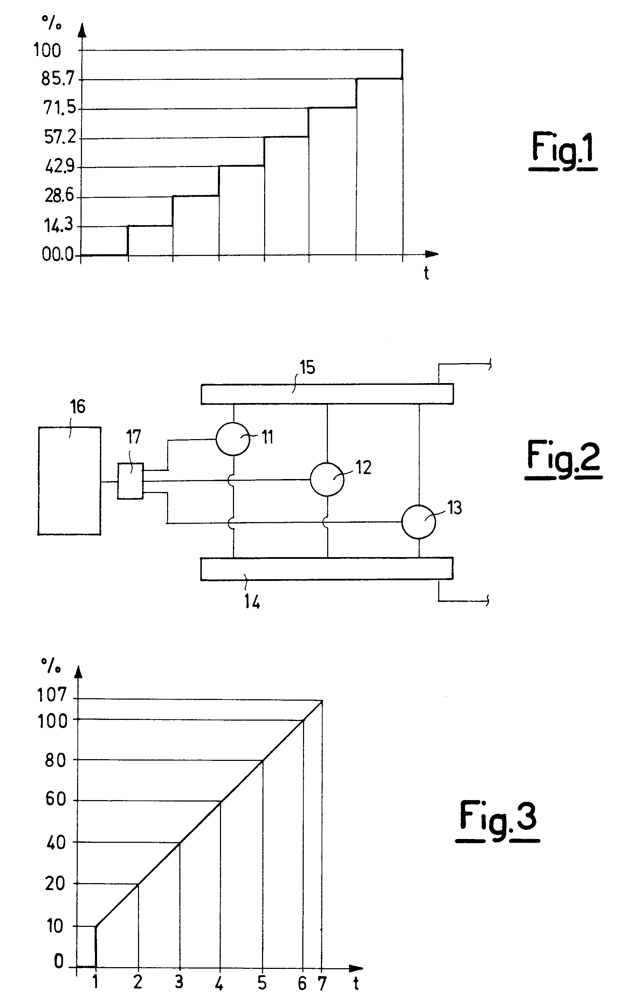

With reference to Figure 1, which as stated represents an operating curve of a refrigeration system of known type using three motor-compressor units of different power, it can be seen that stepped power values of only limited number are available to satisfy the various refrigeration requirements.

Such a system provides powers which are either partly unused for determined requirements or prove insufficient for these requirements. Only rarely does the power available correspond to that effectively required.

The present invention therefore provides a multi-compressor refrigeration system shown schematically in Figure 2 in terms of those components concerning the present description, and which is usable for any users.

The refrigeration system comprises essentially a central refrigeration unit provided with a plurality of motor-compressor units, these being three in number in the illustrated example and indicated by 11, 12 and 13 respectively, which are of different unit power and are arranged in parallel between a suction manifold 14 and a delivery manifold 15. In the system according to the present invention an inverter 17 is associated with a central dedicated or programmable logic system 16 to selectively activate and operate the individual motor-compressor units 11, 12 and 13.

Such an arrangement enables a power to be obtained which selectively increases linearly, and enables it to be maintained equal to the particular requirement of the users, not shown.

This operation will be more apparent from the curve of Figure 3, which relates to the system of Figure 2.

It will be assumed that the two motor-compressor units 11 and 12 are of high power, for example each equal to 40% of the total power, and that the motor-compressor unit 13 is of low power, ie equal to about 20% of the total power.

The horizontal axis of the curve represents the times at which the motor-compressor units are activated and the vertical axis represents the percentage of the available power.

It can be seen that by means of the dedicated or programmable logic system 16, the compressor 13 is initially activated at time t₁ operating at 25 Hz to hence reach a power equal to 10% of the total power. If the power requirement increases, the power can be increased linearly by varying the feed voltage frequency up to 50 Hz to obtain 20% of the total power (time t₂). To further increase the delivered refrigeration power alternative methods can be used. Either the compressor 13 can be fed at a frequency of 60 Hz (to hence obtain 21.5% of the total power), it being necessary to wait a certain time Δt to be sure that the requirement is not a transient, or the compressor 13 can be turned off and the compressor 12 be fed via the same inverter at a frequency of 25 Hz, corresponding to 20% of the total power (time t₂).

It is hence possible to continue to linearly increase the delivered power by varying the frequency up to 50 Hz (time t₃) to obtain a power equal to 40% of the total power. To further increase the delivered refrigeration power either the compressor 12 can be fed at a frequency of 60 Hz (to hence obtain 47% of the total power) and waiting a certain time Δt to be sure that the requirement is not a transient, or the compressor 13 can be activated and the feed frequency of the compressor 12 be reduced to 25 Hz (the result again being 40% of the total power, and delivered at time t₃). The delivered power can then be increased linearly by varying the frequency up to 50 Hz (time t₄) to hence obtain a power equal to 60% of the total power. A similar method can be used to further increase the delivered refrigeration power.

In this respect, either the compressor 12 can be fed at a frequency of 60 Hz (to hence obtain 67% of the total power) and waiting a certain time Δt to be sure that the requirement is not a transient, or the compressor 13 can be switched off and the compressor 11 be activated, the feed frequency of the compressor 12 then being reduced to 25 Hz (the result again being 60% of the total power, and delivered at time t₄). The delivered power can then be increased linearly by varying the frequency up to 50 Hz (time t₅) to hence obtain a power equal to 80% of the total power.

To further increase the delivered refrigeration power, either the compressor 12 can be fed at a frequency of 60 Hz (to hence obtain 87% of the total power) and waiting a certain time Δt to be sure that the requirement is not a transient, or the compressor 13 can be activated and the feed frequency of the compressor 12 be reduced to 25 Hz (the result again being 80% of the total power, and delivered at time t₅). The delivered power can then be increased linearly by varying the frequency up to 50 Hz (time t₆) to hence obtain a power equal to 100% of the total power.

It is possible to achieve a further 7% (ie 107%) of delivered power by feeding the compressor 12 at a frequency of 60 Hz.

By this means the power of the refrigeration system can be selectively increased linearly by completely utilizing the capability of the system itself without any wastage, the power being maintained equal to the user requirement.

In the aforegoing description and drawings a given number of motor-compressor units and compressor powers have been considered, but these are not binding and can be varied in terms of numbers and individual powers, provided that in general a low-power motor-compressor unit and further high-power motor-compressor units are provided and that all these are connected to and operated by a single inverter.

As stated heretofore, the present invention therefore provides a system of linearly variable power having a cost reduced to a minimum, it being composed essentially of usual motor-compressor units and a single inverter.

## Claims

1. A multi-compressor refrigeration system for different users, comprising a central refrigeration system provided with at least three motor-compressor units (11,12,13) arranged in parallel between a suction manifold (14) and a delivery manifold (15), at least two motor-compressor units (11,12) having a higher unit power and one motor-compressor unit (13) having a lower unit power, a programmable logic system (16) connected to a single inverter (17) to select a respective single one out of the motor-compressor units for controlling the capacity thereof and to selectively switch the other motor-compressor units on or off so as to obtain a continuous increase of the total power corresponding to the requirements of the users.

2. A refrigeration system as claimed in claim 1, characterised in that said two high-power motor-compressor units (11,12) are each of about 40% of the total power and said third-low-power motor-compressor unit (13) is of about 20% of the total power.

## Patentansprüche

1. Multi-Kompressor-Kältesystem für unterschiedliche Verbraucher, mit einem zentralen Kältesystem mit zumindest drei Motor-Kompressor-Einheiten (11,12,13), die parallel zwischen einer Ansaugverteilerleitung (14) und einer Abgabeverteilerleitung (15) liegen, wobei zumindest zwei Motor-Kompressor-Einheiten (11,12) eine höhere Leistung pro Einheit und eine Motor-Kompressor-Einheit (13) eine niedrigere Leistung aufweisen, und mit einem programmierbaren logischen System (16), das an einen einzigen Inverter (17) angeschlossen ist, um jeweils eine einzige der Motor-Kompressor-Einheiten auszuwählen, um deren Leistung zu regeln und um die anderen Motor-Kompressor-Einheiten wahlweise an- oder abzuschalten, so daß ein kontinuierlicher Anstieg der Gesamtleistung entsprechend den Erfordernissen des Verbrauchers erzielt wird.

2. Kältesystem nach Anspruch 1, dadurch gekennzeichnet, daß die zwei Motor-Kompressor-Einheiten (11,12) hoher Leistung jeweils etwa 40% der Gesamtleistung haben und die dritte, eine geringe Leistung aufweisende Motor-Kompressor-Einheit (13) etwa 20% der Gesamtleistung.

## Revendications

1. Système frigorifique à compresseurs multiples destiné à différents utilisateurs, comprenant un système de réfrigération central équipé d'au moins trois unités moteur/compresseur (11, 12, 13) disposées en parallèle entre un collecteur d'admission (14) et un collecteur de refoulement (15), au moins deux unités moteur/compresseur (11, 12) possédant une puissance unitaire supérieure et une unité moteur/compresseur (13) possédant une puissance unitaire inférieure, un système logique programmable (16) relié à un seul inverseur (17) pour sélectionner respectivement une unité parmi les unités moteur/compresseur afin de commander sa capacité et pour mettre en route ou arrêter, au choix, les autres unités moteur/compresseur afin d'obtenir une augmentation continue de la puissance totale, pour correspondre aux besoins des utilisateurs.

2. Système frigorifique selon la revendication 1, caractérisé en ce que les deux unités moteur/compresseur (11, 12) à forte puissance représentent, chacune, environ 40 % de la puissance totale et la troisième unité moteur/compresseur (13), de puissance faible, représente environ 20 % de la puissance totale.
